# EUROPEAN PATENT SPECIFICATION

(11) **EP 3 916 044 B1**
(45) Date of publication and mention of the grant of the patent: **04.01.2023**
(21) Application number: 21174588.0
(22) Date of filing: 19.05.2021
(51) Int. Cl.: C08K 3/08, C08K 3/22, C08K 3/26, C08K 3/34, C08K 3/36, C08K 5/3432, C08K 5/3445, C08K 5/43, C08K 5/50, G03G 15/00, G03G 15/16

(54) **CURABLE SILICONE RUBBER MIXTURE, ELECTROPHOTOGRAPHIC MEMBER, AND ELECTROPHOTOGRAPHIC IMAGE FORMING APPARATUS**
HÄRTBARE SILIKONKAUTSCHUKMISCHUNG, ELEKTROFOTOGRAFISCHES ELEMENT UND VORRICHTUNG ZUR ELEKTROFOTOGRAFISCHEN BILDERZEUGUNG
MÉLANGE DE CAOUTCHOUC DE SILICONE DURCISSABLE, ÉLÉMENT ÉLECTROPHOTOGRAPHIQUE ET APPAREIL DE FORMATION D'IMAGE ÉLECTROPHOTOGRAPHIQUE

(30) Priority: 27.05.2020 JP 2020092607; 23.04.2021 JP 2021073629
(43) Date of publication of application: 01.12.2021
(73) Proprietor: CANON KABUSHIKI KAISHA, OHTA-KU Tokyo 146-8501 (JP)
(72) Inventor: TAKENAGA, Masahiro, Tokyo, 146-8501 (JP); BABA, Yusuke, Tokyo, 146-8501 (JP); SUZUKI, Takeshi, Tokyo, 146-8501 (JP); TANAKA, Toshio, Tokyo, 146-8501 (JP)
(74) Representative: TBK

(56) References cited:
- EP-A1- 2 915 853
- WO-A1-2018/226162
- US-A1- 2018 329 319
- QUEK S K ET AL: "Synthesis and properties of N,N'-dialkylimidazolium bis(nonafluorobutane-1-sulfonyl)imides: a new subfamily of ionic liquids", TETRAHEDRON, ELSEVIER SIENCE PUBLISHERS, AMSTERDAM, NL, vol. 62, no. 13, 27 March 2006 (2006-03-27), pages 3137-3145, XP025001731, ISSN: 0040-4020, DOI: 10.1016/J.TET.2006.01.015 [retrieved on 2006-03-27]

## Description

### BACKGROUND

### Field

The present disclosure relates to an electrophotographic member used in an electrophotographic image forming apparatus and a curable silicone rubber mixture.

### Description of the Related Art

An electrophotographic image forming apparatus has been required to form a high-quality electrophotographic image even on a recording medium having a non-smooth surface such as thick paper or embossed paper having a paper basis weight exceeding 300g/m². However, when an electrophotographic image is formed on the surface of a recording medium whose surface is not smooth such as rough surface paper, the transfer of the toner image to recesses on the surface of the recording medium may be insufficient. To solve such problems, it is effective to use an intermediate transfer belt having an electroconductive elastic layer including rubber such as silicone rubber, which has excellent followability to the surface shape of the recording medium (Japanese Patent Application Laid-Open No. 2015-52680).

Japanese Patent Application Laid-Open No. 2009-173922 discloses an electroconductive silicone rubber having a small variation in volume resistivity in a semi-electroconductive region and a small voltage dependence of volume resistivity. The electroconductive silicone rubber described in Japanese Patent Application Laid-Open No. 2009-173922 has a composition consisting of the following (A) to (C):
(A) 100 parts by weight of thermosetting silicone rubber;
(B) 1 to 150 parts by weight of electroconductive carbon black; and
(C) 0.05 to 1000 ppm of an ionic liquid in which the anionic component is a bis(trifluoromethanesulfonyl)imide and the cation component is a cation having at least one alkenyl group. The ionic liquid is poorly water-soluble or water-insoluble, is a liquid at 25°C, and has a decomposition temperature of 220°C or more.

Japanese Patent Application Laid-Open No. 2009-173922 discloses an electroconductive roller provided with a cured product layer of the electroconductive silicone rubber composition.

The present inventors have found that it is effective to set the transfer voltage to a high voltage such as 1000V in order to reliably transfer the toner image on the intermediate transfer belt to the recesses of the recording medium having rough surface.

Therefore, a DC voltage of 1000 V was applied for 6 hours to an intermediate transfer belt provided with an electroconductive elastic layer consisting of a cured product of the electroconductive silicone rubber composition according to Japanese Patent Application Laid-Open No. 2009-173922, and then the change in volume resistivity from the initial value was observed. As a result, a significant change in volume resistivity was observed.

### SUMMARY

At least one aspect of the present disclosure is directed to providing a curable silicone rubber mixture that provides a curable silicone rubber having a small change in volume resistivity when a high voltage such as 1000V is applied for a long period of time.

In addition, at least one aspect of the present disclosure is directed to providing an electrophotographic member that contributes to the stable formation of a high-quality electrophotographic image for a long period of time.

Furthermore, at least one aspect of the present disclosure is directed to providing an electrophotographic image forming apparatus that can stably form a high-quality electrophotographic image for a long period of time.

According to one aspect of the present disclosure, there is provided a curable silicone rubber mixture, comprising: a curable silicone rubber; a cation having one or more carbon-carbon double bonds in a molecular structure thereof; a metal oxide particle having a hydrophilization ratio at a surface of the metal oxide particle of 0.50 or more; and an anion, wherein the anion is at least one compound selected from the group consisting of compounds represented by the following structural formulae (1) and (2): 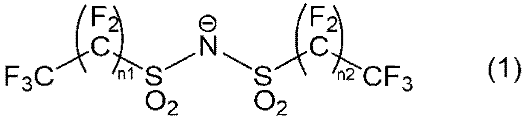 (In structural formula (1), n1 and n2 each independently represent an integer of 2 or more and 7 or less) 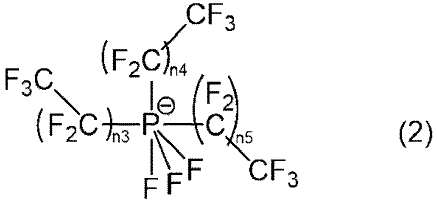 (In structural formula (2), n3, n4, and n5 each independently represent an integer of 1 or more and 5 or less).

According to another aspect of the present disclosure, there is provided an electrophotographic member, comprising a substrate and an elastic layer on the substrate, the elastic layer containing: a silicone rubber; a cation having one or more carbon-carbon double bonds in a molecular structure thereof; a metal oxide particle having a hydrophilization ratio at a surface thereof of 0.50 or more; and an anion, wherein the anion is at least one compound selected from the group consisting of compounds represented by the following structural formulae (1) and (2): 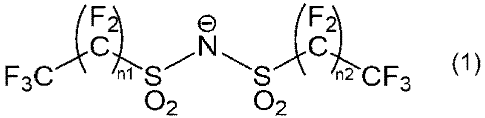
wherein n1 and n2 each independently represent an integer of 2 or more and 7 or less; and 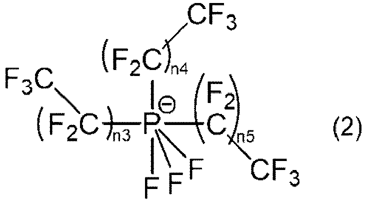
wherein n3 to n5 each independently represent an integer of 1 or more and 5 or less.

According to still another aspect of the present disclosure, there is provided an electrophotographic image forming apparatus including the above electrophotographic member as an intermediate transfer member.

Further features of the present disclosure will become apparent from the following description of exemplary embodiments with reference to the attached drawings.

### BRIEF DESCRIPTION OF THE DRAWINGS

FIG. 1 is a schematic view showing an example of a full-color electrophotographic image forming apparatus.
FIG. 2 is a schematic view of an endless-shaped electrophotographic member according to one aspect of the present disclosure.

### DESCRIPTION OF THE EMBODIMENTS

We have estimated as follows the reason why the volume resistivity of the intermediate transfer belt using the cured product of the electroconductive silicone rubber composition according to Japanese Patent Application Laid-Open No. 2009-173922 is significantly changed when applying a high voltage thereto for a long period of time.

That is, it is considered that the electroconductivity of the cured product of the electroconductive silicone rubber composition according to Japanese Patent Application Laid-Open No. 2009-173922 depends on both the electron electroconductivity by the electroconductive carbon black and the ion electroconductivity by the ionic liquid. Herein, it is considered that the expression of electroconductivity by the electroconductive carbon black is caused by the so-called tunnel effect due to the jump of π electrons between the carbon black particles. This is also consistent with the fact that the electron electroconductivity largely depends on the dispersed condition of carbon black.

It is considered that the above ionic liquid serves as transferring electrical charges between the carbon black particles. When a high voltage is applied to such a cured product, the cation and anion constituting the ionic liquid gradually move in the cured product, and their positions against the carbon black particles change. As a result, it is considered that the degree of electrical charge transfer between the carbon black particles changes and thus the volume resistivity of the cured product changes. The surface of the electroconductive carbon black included in the electroconductive silicone rubber composition according to Japanese Patent Application Laid-Open No. 2009-173922 has a hydroxyl group, and a part of the cations having at least one alkenyl group are considered to be mutually interactive with the carbon black. However, the number of hydroxyl groups present on the surface of carbon black is small, and it is considered that the effect of suppressing the movement of the cation when a high voltage is applied is extremely limited if the hydroxyl groups interact with the cation. Therefore, when a high voltage is applied to the cured product of the electroconductive silicone rubber composition according to Japanese Patent Application Laid-Open No. 2009-173922, it is considered that the change in the presence position of the cation against carbon black is not sufficiently suppressed. Therefore, it is considered that a large change in volume resistivity occurs when a high voltage is applied to the cured product.

The present inventors have considered that the cured product of the electroconductive silicone rubber with electroconductivity hardly changed when a high voltage is applied can be obtained by more definitely suppressing the movement of ions in the cured product. As a result of repeated investigations based on this consideration, it has been found that a liquid silicone rubber mixture including a metal oxide particle having a surface hydrophilization ratio of 0.50 or more, the cation having one or more carbon-carbon double bonds in the molecular structure, and the fluorine-containing anion having a specific structure provides an electroconductive silicone rubber with electroconductivity hardly changed when a high voltage is applied.

The curable silicone rubber mixture according to one aspect of the present disclosure includes curable silicone rubber, cation, anion, and a metal oxide particle. The cation has one or more carbon-carbon double bonds in the molecular structure. In addition, the hydrophilization ratio at the surface of the metal oxide particle is 0.50 or more. Furthermore, the anion is at least one selected from the group consisting of the compounds represented by the following structural formulae (1) and (2). 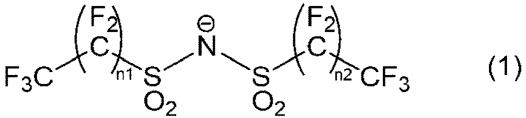 (In structural formula (1), n1 and n2 each independently represent an integer of 2 or more and 7 or less) 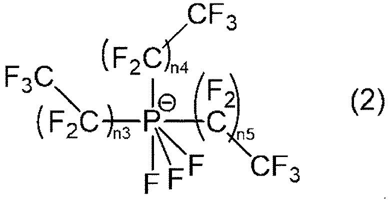 (In structural formula (2), n3 to n5 each independently represent an integer of 1 or more and 5 or less)

The reason why the volume resistivity of the cured product of the curable silicone rubber mixture according to the present aspect is hardly changed when a high voltage is applied is considered as follows. That is, the cation having a carbon-carbon double bond interacts with the hydroxyl group existing on the hydrophilic surface of the metal oxide particle, and thereby the mobility of the cation decreases, and uneven distribution of the ions hardly occurs when a high voltage is applied. In addition, the anion represented by structural formula (1) or structural formula (2) has a high molecular weight and many fluorocarbon groups, and therefore has a high affinity with silicone rubber that is hydrophobic. Therefore, the mobility of the anion is also reduced, and the uneven distribution of ions due to the application of a high voltage further hardly occurs.

Hereinafter, each component will be described in detail.

### <Curable silicone rubber>

An addition-curable liquid silicone rubber can be used as the curable silicone rubber. The addition-curable liquid silicone rubber includes the following components (a), (b), and (c):
(a) organopolysiloxane with unsaturated aliphatic groups;
(b) organopolysiloxane with active hydrogen bonded to a silicon atom; and
(c) platinum compound as a cross-linking catalyst.

Examples of the organopolysiloxane having an unsaturated aliphatic group, which is the above component (a), include the following:
• linear organopolysiloxane, both ends of which are represented by (R₁)₂R₂SiO_{1/2} and intermediate units of which are represented by (R₁)₂SiO and R₁R₂SiO; and
branched organopolysiloxane, both ends of which are represented by (R₁)₂R₂SiO_{1/2} and including R₁SiO_{3/2} or SiO_{4/2} as the intermediate unit.

Herein, R₁ represents an unsubstituted or substituted monovalent hydrocarbon group that does not include an unsaturated aliphatic group and is bonded to a silicon atom in the above formula. Specific examples of the hydrocarbon group include the following;
- alkyl group (for example, methyl group, ethyl group, propyl group, butyl group, pentyl group, and hexyl group); and
- aryl group (for example, phenyl group and naphthyl group).

Examples of the substituent that the hydrocarbon group may have include: a halogen atom such as a fluorine atom and a chlorine atom; an alkoxy group such as a methoxy group and an ethoxy group; and a cyano group. Specific examples of the substituted hydrocarbon group include a chloromethyl group, a 3-chloropropyl group, a 3,3,3-trifluoropropyl group, a 3-cyanopropyl group, and a 3-methoxypropyl group. Of these, 50% or more of R₁ is preferably a methyl group, and all of R₁ are more preferably methyl groups, since synthesizing and handling are easy and excellent heat resistance can be obtained.

In addition, R₂ represents an unsaturated aliphatic group bonded to a silicon atom in the above formula. Examples of the unsaturated aliphatic group include a vinyl group, an allyl group, a 3-butenyl group, a 4-pentenyl group, and a 5-hexenyl group. Of these, a vinyl group is preferable since synthesizing and handling are easy and the cross-linking reaction of the silicone rubber easily proceeds.

The organopolysiloxane, the above component (b), having the active hydrogen bonded to a silicon atom, is a cross-linking agent that forms a cross-linked structure obtained from reaction with the unsaturated aliphatic group of the component (a) by the catalytic action of the platinum compound that is the component (c). The number of the active hydrogen bonded to the silicon atom in component (b) is preferably more than 3 on average in one molecule.

Examples of the organic group bonded to the silicon atom in the organopolysiloxane, component (b), having the active hydrogen bonded to the silicon atom include an unsubstituted or substituted monovalent hydrocarbon group, which is the same as R₁ of component (a), including no unsaturated aliphatic group. Particularly, a methyl group is preferable as the organic group, since synthesizing and handling are easy. The molecular weight of the organopolysiloxane having the active hydrogen bonded to the silicon atom is not particularly limited.

In addition, the viscosity of component (b) at 25°C is preferably 10 mm²/s or more and 100000 mm²/s or less, and more preferably 15 mm²/s or more and 1000 mm²/s or less. As long as the viscosity of the organopolysiloxane at 25°C is within the above range, the organopolysiloxane does not volatilize during storage and thus the desired degree of cross-linking and physical properties of the molded product can be obtained, and synthesizing and handling are easy, facilitating uniform dispersion in the system.

The siloxane skeleton of component (b) may be any of linear, branched, and cyclic, and a mixture thereof may be used. Particularly, from the viewpoint of ease of synthesis, a linear one is preferable. In addition, in component (b), the Si-H bond may be present in any siloxane unit in the molecule, and at least a part thereof is preferably present in the siloxane unit at the end of the molecule such as (R₁)₂HSiO_{1/2} unit.

The addition-curable liquid silicone rubber preferably has an unsaturated aliphatic group content of 0.1 mol% or more and 2.0 mol% or less, and more preferably 0.2 mol% or more and 1.0 mol% or less, with respect to 1 mol of silicon atom.

The hardness of the cured silicone rubber is preferably 5 degrees or more and 80 degrees or less, and more preferably 15 degrees or more and 60 degrees or less in the type A hardness indicated by JIS.

A known platinum compound can be used as the above component (c).

### <Cation with one or more carbon-carbon double bonds in the molecular structure>

The cation is not particularly limited as long as it has one or more carbon-carbon double bonds in the molecular structure. Examples of preferable cation include the cation selected from the group consisting of the compound represented by the following structural formula (3), the compound represented by the following structural formula (4), and the compound represented by the following structural formula (5). 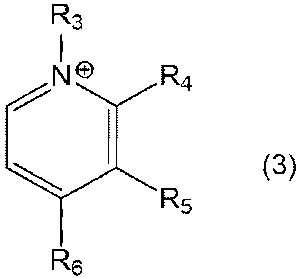 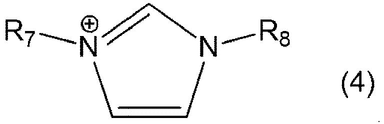 (In structural formula (3) and structural formula (4), R₃, R₇, and R₈ each independently represent a hydrocarbon group having 1 or more and 8 or less of carbon atoms, and R₄ to R₆ independently represent a hydrogen atom or a hydrocarbon group having 1 or more and 8 or less of carbon atoms) 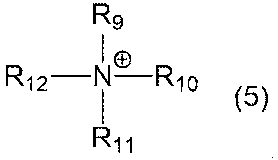 (In the structural formula (5), R₉ to R₁₂ each independently represent one group selected from the group consisting of the group represented by the following structural formula (5-2) and the hydrocarbon group having 1 or more and 8 or less of carbon atoms; however, at least one of R₉ to R₁₂ is a group represented by the following structural formula (5-2)) 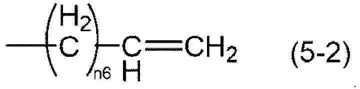 (In structural formula (5-2), n6 represents an integer of 0 or more and 6 or less)

In R₃ to R₈ in structural formula (3) and structural formula (4) and in structural formula (5), examples of the hydrocarbon group that can be represented by R₉ to R₁₂ include the following hydrocarbon groups;
i) a linear or branched saturated hydrocarbon group having 1 or more and 8 or less of carbon atoms;
ii) a linear or branched unsaturated hydrocarbon group having 2 or more and 8 or less of carbon atoms;
iii) a substituted or unsubstituted saturated alicyclic hydrocarbon group having 3 or more and 8 or less of carbon atoms;
iv) a substitutable or unsubstituted unsaturated alicyclic hydrocarbon group having 4 or more and 8 or less of carbon atoms; and
v) a substituted or unsubstituted aromatic hydrocarbon group (phenyl group) having 6 carbon atoms.

Herein, examples of the substituents of the above saturated alicyclic hydrocarbon group, the above unsaturated alicyclic hydrocarbon group, and the above aromatic hydrocarbon group include an alkyl group having 1 or more and 3 or less of carbon atoms. The carbon number of "the hydrocarbon group having 1 or more and 8 or less of carbon atoms" is the number of carbon atoms including the carbon number of the substituent.

Hereinafter, each cation will be described in detail. Herein, a) pyridinium-based ion (structural formula (3)), b) imidazolium-based ion (structural formula (4)), and c) ammonium-based ion (structural formula (5)) will be described in order.

### a) Pyridinium-based ion

Specific examples of the pyridinium-based ion represented by the above structural formula (3) are described as follows:
1-Ethylpyridinium ion, 1-butylpyridinium ion, 1-hexylpyridinium ion, 1-(tert-butyl)pyridinium ion, 1-phenylpyridinium ion, 1-(2,4-dimethylphenyl)pyridinium ion, 1-butyl-2-methylpyridinium ion, 1-ethyl-3-methylpyridinium ion, 1-propyl-3-methylpyridinium ion, 1-butyl-3-methylpyridinium ion, and 1-butyl-4-methylpyridinium ion.

### b) Imidazolium-based ion

Specific examples of the imidazolium-based ion represented by the above structural formula (4) are described as follows:
1-Ethyl-3-methylimidazolium ion, 1-butyl-3-methylimidazolium ion, 1-hexyl-3-methylimidazolium ion, 1-methyl-3-octylimidazolium ion, 1-(tert-butyl)-3-methylimidazolium ion, 1-phenyl-3-methylimidazolium ion, and 1-(2,4-Dimethylphenyl)-3-methylimidazolium ion.

### c) Ammonium-based ion

Specific examples of the ammonium-based ion represented by the above structural formula (5) are described as follows:
N,N,N-trimethyl-N-(2-propenyl)ammonium ion, N,N,N-tributyl-N-(2-propenyl)ammonium ion, N,N,N-trioctyl-N-(2-propenyl)ammonium ion, and N,N,N-tributyl-N-(3-butenyl)ammonium ion.

Particularly, the cations represented by structural formula (3) and structural formula (4) have a planar cyclic structure and have small steric hindrance, and are more preferable in that the cations easily interact with the metal oxide particle.

The above cation may be used singly or in combination of two or more. In addition, the curable silicone rubber mixture may include the cations other than the above cations, as necessary, as long as exhibition of the effects of the present disclosure is not hindered. For example, the cation modified with a methylsiloxane chain has a chemical structure similar to that of curable silicone rubber and thus has a high affinity for the curable silicone rubber. Therefore, when the curable silicone rubber mixture includes the cation modified with a methylsiloxane chain, the curable silicone rubber mixture exhibits more uniform electroconductivity.

The presence of the above cation in the curable silicone rubber mixture can be confirmed by immersing the cured curable silicone rubber mixture in a solvent such as acetone, and by extracting and analyzing the components eluted to the solvent. Examples of the analytical method include liquid chromatography mass spectrometry and nuclear magnetic resonance spectroscopy.

### <Anion>

An anion is at least one compound selected from the group consisting of the compounds represented by structural formulae (1) and (2).

Specific examples of the anion represented by structural formula (1) are described as follows:
Bis(perfluoropropanesulfonyl)imide ion, bis(perfluorobutanesulfonyl)imide ion (also referred to as bis(nonafluorobutanesulfonyl)imide ion), bis(perfluorooctanesulfonyl)imide ion, and perfluoropropanesulfonylperfluorobutanesulfonylimide ion.

Specific examples of the anion represented by structural formula (2) are described as follows:
Tris(perfluoroethyl)trifluorophosphate (or tris(pentafluoroethyl)trifluorophosphate), tris(perfluoropropyl)trifluorophosphate, tris(perfluorohexyl)trifluorophosphate, and bis(perfluoroethyl)(perfluoropropyl)trifluorophosphate.

The above anion may be used singly or in combination of two or more.

The total amount of the anion and the cation combined with respect to 100 parts by mass of the curable silicone rubber is preferably 0.01 parts by mass or more and 10 parts by mass or less, and more preferably 0.05 parts by mass or more and 5 parts by mass or less. Setting the total amount of the cation and anion with respect to the curable silicone rubber within the above range makes it easy to adjust the volume resistivity of the cured product of the curable silicone rubber mixture within the range of the semi-electroconductive region. Herein, the volume resistivity of the cured product of the curable silicone rubber mixture is adjusted in collaboration with the metal oxide particle having a hydroxyl group on the surface, as described later. In addition, regarding the volume resistivity, the semi-electroconductive region is a range such as 1.0 × 10⁸ Ω·cm or more and 2.0 × 10¹¹ Ω·cm or less.

### <Metal oxide particle>

The hydrophilization ratio at the surface of the metal oxide particle is 0.50 or more. The metal oxide particle is an important component for adjusting the volume resistivity of the cured product of the curable silicone rubber by ionic electroconductivity to the above medium resistance region.

The hydrophilization ratio is defined as follows. That is, the hydroxyl group bonded to the metal atom constituting the metal oxide particle is represented by Me-OH, and the oxygen atom bonded to the metal atom constituting the metal oxide particle by a double bond is represented by Me=O. Regarding the IR spectrum obtained by measuring the surface of the metal oxide particle, the value obtained by dividing the absorbance at the wavelength representing Me-OH by the absorbance at the wavelength representing Me=O is defined as the hydrophilization ratio.

The presence of the metal oxide particle in the curable silicone rubber mixture can be confirmed by, for example, extracting the solid content from the curable silicone rubber mixture and performing analysis by near-infrared spectroscopic analysis described later. Specifically, the solid content can be obtained by diluting the liquid curable silicone rubber mixture with a solvent such as toluene and filtering with a filter.

In addition, the presence of the metal oxide particle in the cured product of the curable silicone rubber mixture can be confirmed as follows. The cured product of the curable silicone rubber mixture is dissolved in a soluble solvent (for example, trade name: e-SOLVE 21RS, manufactured by Kaneko Kagaku Co., Ltd.) and filtered through a filter to obtain a solid content. Subsequently, the obtained solid content is analyzed by near-infrared spectroscopic analysis, as described later.

Examples of the metal oxide particle include hydrophilic silica particle and hydrophilic alumina particle as shown below.

### «Hydrophilic silica particle»

Hydrophilic silica particle refers to those with the surface of the silica particle sufficiently hydrophilized. The degree of hydrophilization of the silica surface can be evaluated by an analytical method such as near-infrared spectroscopy. Specifically, the near-infrared spectrum (IR spectrum) of the surface of the silica particle is measured by a near-infrared spectroscope (for example, trade name: Frontier NIR, manufactured by PerkinElmer Co., Ltd.). In this spectral data, the hydrophilization ratio can be calculated by dividing the absorbance at 7300 cm⁻¹ corresponding to Si-OH by the absorbance at 4500 cm⁻¹ corresponding to SiO₂. From the value of the hydrophilization ratio calculated as described above, the amount of Si-OH present on the surface can be evaluated. The hydrophilic silica particle is the one having a hydrophilization ratio of 0.50 or more calculated by the above method. The hydrophilization ratio of the hydrophilic silica particle is particularly preferably 0.51 or more and 0.98 or less.

The silica particle satisfying the above hydrophilization ratio is not particularly limited, and may be used singly, or may be used in combination of two or more.

### «Hydrophilic alumina particle»

Hydrophilic alumina particle refers to those with the surface of the alumina particle sufficiently hydrophilized. The hydrophilization ratio of hydrophilic alumina can be calculated by the same method as the above method for calculating the hydrophilization ratio of silica particle. In the case of hydrophilic alumina, the hydrophilization ratio of hydrophilic alumina can be calculated by dividing the absorbance at 3690 cm⁻¹ corresponding to Al-OH by the absorbance at 7425 cm⁻¹ corresponding to Al₂O₃. From the value of the hydrophilization ratio calculated as described above, the amount of Al-OH present on the surface can be evaluated. The hydrophilic alumina particle that can be preferably used has a hydrophilization ratio of 0.50 or more calculated by the above method.

The curable silicone rubber mixture preferably includes metal oxide particle in a ratio of 0.1 parts by mass or more and 30.0 parts by mass or less with respect to 100 parts by mass of the curable silicone rubber, and particularly preferably in a ratio of 0.2 parts by mass or more and 5.0 parts by mass or less.

Setting the amount of metal oxide particle having a hydroxyl group on the surface with respect to the curable silicone rubber within the above range can easily adjust the volume resistivity of the cured product of the curable silicone rubber mixture to the medium resistance region. In addition, when a high voltage is applied to the cured product, the fluctuation of the volume resistivity can be suppressed more definitely. Furthermore, it is possible to prevent the curable silicone rubber mixture from becoming too viscous.

### <Electronic electroconductive agent>

In the curable silicone rubber mixture according to the present disclosure, the movement of the cation is restricted by metal oxide particle having a hydrophilization ratio of 0.50 or more, and therefore it is considered that the change in electroconductivity when a high voltage is applied as observed in the cured product of the electroconductive silicone rubber composition according to Japanese Patent Application Laid-Open No. 2009-173922 does not occur if an electronic electroconductive agent such as carbon black coexists. However, the electroconductivity derived from the electronic electroconductive agent largely depends on the dispersed condition of the electronic electroconductive agent. Therefore, the curable silicone rubber mixture according to the present disclosure preferably is free of the electronic electroconductive agent. Alternatively, it is preferable to include the electronic electroconductive agent in an amount within a range in which electron electroconductivity is hardly expressed. Specifically, when the electronic electroconductive agent is included, the content thereof is preferably 0.3 parts by mass or less with respect to 100 parts by mass of the silicone rubber in the curable silicone rubber mixture.

Examples of the electronic electroconductive agent include electroconductive carbon black such as acetylene black and ketjen black, graphite, graphene, carbon fiber, carbon nanotubes, metal powders such as silver, copper, and nickel, electroconductive zinc oxide, electroconductive calcium carbonate, electroconductive titanium oxide, electroconductive tin oxide, and electroconductive mica.

### <Additive>

The curable silicone rubber mixture according to the present disclosure may include not only the above materials but also additives such as filler, cross-linking accelerator, cross-linking retarder, cross-linking aids, colorants, scorch inhibitors, anti-aging agents, softeners, heat stabilizers, flame retardants, flame retardant promoters, UV absorbers, and rust inhibitors.

### [Electrophotographic member]

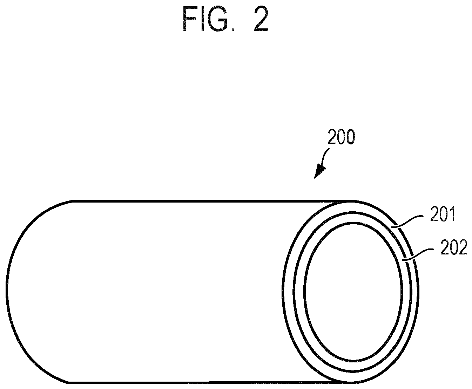

Electrophotographic member will be described. The electrophotographic member according to the present disclosure has a substrate and an elastic layer on the substrate. FIG. 2 is a schematic view of electrophotographic member 200 having an endless shape (hereinafter, also referred to as "electrophotographic belt") according to one aspect of the present disclosure. Electrophotographic belt 200 is composed of endless-shaped substrate 202 and elastic layer 201 formed on the outer peripheral surface thereof. A surface layer (not shown) may be further provided on the outer peripheral surface of elastic layer 201, as necessary.

The volume resistivity of the electrophotographic member is preferably 1.0 × 10⁸ Ω·cm or more and 2.0 × 10¹¹Ω·cm or less.

### <Elastic layer>

An elastic layer is a cured product of the above curable silicone rubber mixture.

The elastic layer can be formed on a substrate by applying the above curable silicone rubber mixture on the substrate having a cylindrical, columnar, or endless belt shape and then curing the mixture.

The thickness of the elastic layer can be appropriately adjusted within a range that satisfies the function as an electrophotographic member. Particularly, the thickness of the elastic layer for the intermediate transfer belt is preferably 80 µm or more and 600 µm or less, and more preferably 150 µm or more and 400 µm or less, from the viewpoint of the amount of compression deformation at nip and the suppression of color shift of the toner image on the surface of the intermediate transfer belt.

### <Substrate>

A substrate having a cylindrical shape, a columnar shape, or an endless belt shape can be used depending on the shape of the electrophotographic member. The material of the substrate is not particularly limited as long as it is a material that is excellent in heat resistance and mechanical strength. Examples thereof include: metals such as aluminum, iron, copper, and nickel; alloys such as stainless steel and brass; ceramics such as alumina and silicon carbide; and resins such as polyetheretherketone, polyetyleneterephthalate, polybutylenenaphthalate, polyester, polyimide, polyamide, polyamideimide, polyacetal, and polyphenylenesulfide.

When a resin is used as the material of the substrate, electroconductivity may be imparted by adding electroconductive powder such as metal powder, electroconductive oxide powder, or electroconductive carbon. The preferable volume resistivity of the substrate is, for example, 1.0 × 10⁷ Ω·cm or more and 1.0 × 10¹³ Ω·cm or less. In addition, when the substrate is an electroconductive substrate in such a medium resistance region, the ratio of the volume resistivity of the above elastic layer to the volume resistivity of the substrate layer (volume resistivity of the elastic layer / volume resistivity of substrate) is preferably 0.01 to 100.

Resins having excellent flexibility and mechanical strength are particularly preferable as the material of the substrate, and of these, polyetheretherketone including carbon black as an electroconductive powder and polyimide including carbon black as an electroconductive powder are particularly preferably used. In addition, the thickness of the endless-shaped substrate is, for example, 10 µm or more and 500 µm or less, and particularly 30 µm or more and 150 µm or less.

In order to bond the substrate and the elastic layer more firmly, a primer may be appropriately applied to the outer surface of the substrate. The primer used herein is a coating in which a colorant is appropriately blended and dispersed in an organic solvent, such as silane coupling agent, silicone polymer, hydrogenated methylsiloxane, alkoxysilane, reaction promoting catalyst, and bengala. A commercially available product can be used as the primer. The primer treatment is performed by applying this primer to the outer surface of the substrate and then drying or firing the primer. The primer can be appropriately selected depending on the material of the substrate, the type of the elastic layer, or the form of the cross-linking reaction. Particularly, when the elastic layer includes a large amount of unsaturated aliphatic groups, a primer containing a hydrosilyl group is preferably used in order to impart adhesiveness by reacting with the unsaturated aliphatic group. Examples of a commercially available primer having such characteristics include DY39-051A/B (manufactured by Toray Dow Corning Co., Ltd.).

In addition, when the elastic layer includes a large amount of hydrosilyl groups, a primer containing an unsaturated aliphatic group is preferably used. Examples thereof include a commercially available primer having such characteristics, DY39-067 (manufactured by Toray Dow Corning Co., Ltd.). Other primers include those including an alkoxy group. In addition, applying a surface treatment such as ultraviolet irradiation to the surface of the substrate aids the cross-linking reaction between the substrate and the elastic layer to allow further strengthening the adhesive force. In addition, the primers other than the above primers include X-33-156-20, X-33-173A/B, X-33-183A/B (manufactured by Shin-Etsu Chemical Co., Ltd.), DY39-90A/B, DY39-110A/B, DY39-125A/B, and DY39-200A/B (manufactured by Toray Dow Corning Co., Ltd.).

### <Surface layer>

The surface layer of the electrophotographic member is required to be resistant to abrasion due to rubbing against a recording medium such as paper or various contact members such as a drum, and to have low adhesion so that the toner for example does not stick to the surface. The resin used for the surface layer is not particularly limited as long as it has low adhesion, and examples thereof include fluororesin, fluorine-containing urethane resin, fluororubber, and siloxane-modified polyimide. Of these, the surface layer for the intermediate transfer belt preferably consists of a fluorine-containing urethane resin, from the viewpoint of not impairing the elastic function of the elastic layer.

The thickness of the surface layer is preferably 0.5 µm or more and 20 µm or less, and more preferably 1 µm or more and 10 µm or less. The thickness of the surface layer of 0.5 µm or more makes it easy to suppress the loss of toner due to the abrasion of the surface layer with use. In addition, when the thickness of the surface layer is 20 µm or less, the elastic function of the elastic layer is not impaired.

The surface layer may include the above electronic electroconductive agent, as necessary. The content of the electronic electroconductive agent in the surface layer is preferably 30 parts by mass or less with respect to 100 parts by mass of the surface layer, from the viewpoint of adhesion and mechanical strength.

In addition, a primer layer may be provided between the elastic layer and the surface layer, as necessary. The thickness of the primer layer is preferably 0.1 µm or more and 15 µm or less, and more preferably 0.5 µm or more and 10 µm or less, from the viewpoint of not inhibiting the elastic function.

### <Electrophotographic image forming apparatus>

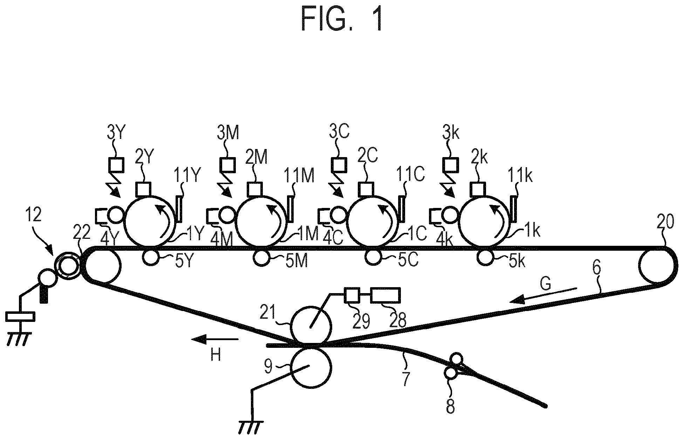

The electrophotographic image forming apparatus according to one aspect of the present disclosure includes the above electrophotographic member according to the present disclosure as an intermediate transfer member (intermediate transfer belt). An example of the embodiment of the electrophotographic image forming apparatus will be described with reference to FIG. 1.

The image forming apparatus of the present embodiment has a so-called tandem-type configuration in which image forming stations of a plurality of colors are arranged side by side in the rotation direction of an electrophotographic endless belt (hereinafter referred to as "intermediate transfer belt"). In the following explanation, the symbols of the configurations for each color of yellow, magenta, cyan, and black are subscripted with Y, M, C, and k, respectively; however, the subscripts may be omitted for the same configuration.

For the symbol in FIG. 1, 1Y, 1M, 1C, and 1k are photosensitive drums (photosensitive member, image carrier), charging devices 2Y, 2M, 2C, and 2k, exposing devices 3Y, 3M, 3C, and 3k, developing devices 4Y, 4M, 4C, and 4k, and intermediate transfer belt (intermediate transfer body) 6 are arranged around photosensitive drum 1. Photosensitive drum 1 is rotationally driven at a predetermined peripheral speed (process speed) in the direction of arrow F. Charging device 2 charges the peripheral surface of photosensitive drum 1 to a predetermined polarity and potential (primary charging). The laser beam scanner as exposing device 3 outputs laser light that has been on/off-modulated in response to image information input from an external device such as an image scanner or a computer (not shown), and thereby the charged surface on photosensitive drum 1 is scanned and exposed. This scanning exposure forms an electrostatic latent image corresponding to the target image information on the surface of photosensitive drum 1.

Developing devices 4Y, 4M, 4C, and 4k include toners of color components of yellow (Y), magenta (M), cyan (C), and black (k), respectively. Developing device 4 to be used is selected based on the image information, the developing agent (toner) is developed on the surface of photosensitive drum 1, and the electrostatic latent image is visualized as a toner image. The present embodiment uses a reverse development method in which toner is adhered to the exposed portion of the electrostatic latent image to develop the image. In addition, such a charging device, an exposing device, and a developing device constitute an image forming unit.

In addition, intermediate transfer belt 6 is an electrophotographic endless belt according to the present disclosure, is arranged so as to be in contact with the surface of photosensitive drum 1, and is stretched on a plurality of stretching rollers 20, 21, and 22. The intermediate transfer belt rotates in the direction of arrow G. In the present embodiment, stretching roller 20 is a tension roller for controlling the tension of intermediate transfer belt 6 to be constant, stretching roller 22 is a drive roller for intermediate transfer belt 6, and stretching roller 21 is a counter roller for secondary transfer. In addition, each of primary transfer rollers 5Y, 5M, 5C, and 5k are arranged at the primary transfer positions facing photosensitive drum 1 with the intermediate transfer belt 6 interposed therebetween. The unfixed toner images of each color formed on photosensitive drum 1 are sequentially and electrostatically primary-transferred onto intermediate transfer belt 6 by applying a primary transfer bias having a polarity (for example, positive polarity) opposite to the charging polarity of the toner to primary transfer roller 5 with a constant voltage source or constant current source. Then, obtained is a full-color image in which four colors of unfixed toner images are superposed on intermediate transfer belt 6. Intermediate transfer belt 6 rotates while carrying the toner image transferred from photosensitive drum 1 in this way. At each rotation of photosensitive drum 1 that has been primary-transferred, the surface of photosensitive drum 1 is cleaned with the transfer residual toner removed by cleaning device 11, and the image-forming step is repeated.

In addition, at the secondary transfer position of intermediate transfer belt 6 facing the conveyance path of recording material 7, secondary transfer roller (transfer portion) 9 is pressure-welded on the toner image supporting surface side of intermediate transfer belt 6. In addition, on the back surface side of intermediate transfer belt 6 at the secondary transfer position, arranged is counter roller 21 that serves as the counter electrode of secondary transfer roller 9 and to which the bias is applied. When the toner image on intermediate transfer belt 6 is transferred to recording material 7, a bias having the same polarity as the toner is applied to counter roller 21 by secondary transfer bias applying apparatus 28, for example, -1000 to -3000V is applied and then a current of -10 to -50 µA flows. This transfer voltage is detected by transfer voltage detecting apparatus 29. Moreover, on the downstream side of the secondary transfer position, provided is a cleaning device (belt cleaner) 12 for removing the toner remaining on intermediate transfer belt 6 after the secondary transfer.

Recording material 7 introduced at the secondary transfer position is held and conveyed to the secondary transfer position, and a constant voltage bias (transfer bias) being controlled to a predetermined value is applied to counter roller 21 of the secondary transfer roller 9 by secondary transfer bias applying apparatus 28. Applying a transfer bias having the same polarity as the toner to counter roller 21 collectively transfers onto recording material 7 a four-color full-color image (toner image) superposed on intermediate transfer belt 6 at the transfer site, and thus a full-color unfixed toner image is formed on the recording material. Recording material 7 to which the toner image has been transferred is introduced into a fuser (not shown) and heat-fixed.

One aspect of the present disclosure can provide a curable silicone rubber mixture capable of providing an elastic layer having a small change in volume resistivity when a high voltage such as 1000V is applied for a long period of time. In addition, another aspect of the present disclosure can provide an electrophotographic member capable of stably forming for a long period of time a high-quality electrophotographic image on a recording medium having a non-smooth surface such as thick paper or embossed paper. Still another aspect of the present disclosure can provide an electrophotographic image forming apparatus capable of stably forming for a long period of time a high-quality electrophotographic image on a recording medium having a non-smooth surface.

### [Example]

The materials used in each of examples and comparative examples are shown in Table 1 and Table 2 below.

**Table 1 <Ionic liquid>**

| | |
|---|---|
| Ionic liquid 1 | 1-Ethyl-3-methylpyridinium -bis(nonaflatebutanesulfonyl)imide (manufactured by Kanto Chemical Co., Ltd.) |
| Ionic liquid 2 | 1-Butyl-3-methylpyridinium -bis (nonaflatebutanesulfonyl)imide (manufactured by Kanto Chemical Co., Ltd.) |
| Ionic liquid 3 | 1-Butyl-3-methylimidazolium -bis(nonaflatebutanesulfonyl)imide (manufactured by Kanto Chemical Co., Ltd.) |
| Ionic liquid 4 | 1-Ethyl-3-methylimidazolium -tris(pentafluoroethyl)trifluorophosphate (manufactured by Merck Co., Ltd.) |
| Ionic liquid 5 | N,N,N-trimethyl-N-propylammonium -bis(trifluoromethanesulfonyl)imide (manufactured by Kanto Chemical Co., Ltd.) |

**Table 2 <Metal oxide particle>**

| | |
|---|---|
| Metal oxide particle 1 | AEROSIL90 |
| | (silica, manufactured by Nippon Aerosil Co., Ltd.) hydrophilization ratio: 0.52 |
| Metal oxide particle 2 | AEROXIDE Alu130 |
| | (alumina, manufactured by Nippon Aerosil Co., Ltd.) hydrophilization ratio: 0.67 |
| Metal oxide particle 3 | AEROSIL380 |
| | (silica, manufactured by Nippon Aerosil Co., Ltd.) hydrophilization ratio: 0.98 |

### <Production of an electrophotographic belt>

### [Example 1]

### (Preparation of substrate)

The following materials were put into a twin-screw kneader (trade name: PCM30, manufactured by Ikekai Co., Ltd.) by using a heavy-duty feeder and were kneaded to provide these pellets. The set temperature of the cylinder of the twin-screw kneader was 320°C for the material input portion and was 360°C for the downstream of the cylinder and the die. The screw rotation speed of the twin-screw kneader was set to 300 rpm, and the material supply amount was set to 8 kg/h.

### • Polyetheretherketone

(Trade name: VICTREXPEEK450G, manufactured by Victrex Co., Ltd.): 80 parts by mass

### • Acetylene black

(Trade name: DENKA BLACK granular product, manufactured by Denka Co., Ltd.): 20 parts by mass

The obtained pellets were cylindrically extruded to produce an endless-shaped substrate. Cylindrical extrusion was performed by using a single-screw extruder (trade name: GT40, manufactured by Plastic Engineering Laboratory Co., Ltd.) and a cylindrical die having a circular opening with a diameter of 300 mm and a gap of 1 mm.

Specifically, a heavy-duty feeder was used to feed the pellets to the single-screw extruder at a supply amount of 4 kg/h. The cylinder set temperature of the single-screw extruder was 320°C for the material input portion and was 380°C for the downstream of the cylinder and cylindrical die. The molten resin discharged from the single-screw extruder was extruded from a cylindrical die via a gear pump, and was taken up by a cylindrical haul-off machine at a speed so as to be 60 µm in thickness. In the process of being taken up, the molten resin was cooled and solidified by coming into contact with a cooling mandrel provided between the cylindrical die and the cylindrical haul-off machine. The solidified resin was cut to a width of 400 mm by a cylindrical cutting machine installed at the bottom of the cylindrical haul-off machine to provide an endless-shaped substrate. The volume resistivity of the substrate thus obtained was 6.0 × 10⁹ Ω·cm. The volume resistivity of the substrate was measured by the same method as the measurement of the volume resistivity of the electrophotographic belt described later.

### (Preparation of curable silicone rubber mixture for elastic layer formation)

Prepared was ionic liquid 1 having a cation of 1-ethyl-3-methylpyridinium and an anion of bis(nonafluorobutanesulfonylimide).

2.0 parts by mass of ionic liquid 1 was added to 100 parts by mass of an addition-curable liquid silicone rubber (trade name: TSE3450 A/B, manufactured by Momentive Performance Materials Inc.) and mixed.

2.0 parts by mass of metal oxide particle 1 was added as a metal oxide particle having a hydroxyl group on the surface, and 1.0 part by mass of a black silicone-based coloring material (trade name: LIM color 02, manufactured by Shin-Etsu Chemical Industry Co., Ltd., 15 to 20% by mass of carbon black content) was added. Thereafter, stirring and defoaming were performed by using a planetary stirring defoaming device (trade name: HM-500, manufactured by KEYENCE CORPORATION) to provide an addition-curable liquid silicone rubber mixture. The carbon black content with respect to 100 parts by mass of the silicone rubber in the obtained addition-curable liquid silicone rubber mixture was 0.15 to 0.20 parts by mass.

Subsequently, the outer surface of the above substrate was subjected to ultraviolet irradiation treatment, and then a primer (trade name: DY39-051, manufactured by Toray Dow Corning Co., Ltd.) was applied and heat-dried. The substrate having a primer layer formed on the outer surface was attached to a cylindrical core, and a ring nozzle for discharging rubber was attached coaxially with the core. The addition-curable liquid silicone rubber mixture was supplied to the ring nozzle by using a liquid feeding pump and discharged from the slit to form a layer of the addition-curable liquid silicone rubber mixture on the substrate. The relative moving speed and the discharge amount of the liquid feeding pump were adjusted so that the cured elastic layer had a thickness of 280 µm. The mixture was placed in a heating furnace attached to the core and heated at 130°C for 15 minutes and then at 180°C for 60 minutes to cure the layer of the addition-curable liquid silicone rubber mixture to form an elastic layer.

### (Preparation of surface layer)

Prepared was a fluorine-containing polyurethane resin solution (trade name: Emralon T-861, manufactured by Henkel Japan Ltd.) with polytetrafluoroethylene dispersed in a polyurethane dispersion. Thereafter, the outer surface of the elastic layer was hydrophilized by excimer UV irradiation, fitted to the core, and the urethane resin solution was applied by using a spray gun (trade name: W-101, manufactured by Anest Iwata Co., Ltd.) with rotation at 200 rpm. After applying, this was placed in a heating furnace at 130°C and cured for 30 minutes. In this way, obtained was electrophotographic belt No. 1 having a surface layer having a thickness of 3 µm on the elastic layer.

### [Examples 2 to 14 and Comparative Example 1]

The electrophotographic belts No. 2 to 15 according to Examples 2 to 14 and Comparative Example 1 were obtained in the same manner as in Example 1, except that the types and formulations of the ionic liquid and the metal oxide particle were changed as shown in Table 3 below.

**Table 3**

| | | Electrophotographic belt No. | Ionic liquid | | | | | Metal oxide particle | | |
|---|---|---|---|---|---|---|---|---|---|---|
| | | | Ionic liquid 1 | Ionic liquid 2 | Ionic liquid 3 | Ionic liquid 4 | Ionic liquid 5 | Metal oxide particle 1 | Metal oxide particle 2 | Metal oxide particle 3 |
| Example | 1 | 1 | 2.0 | - | - | - | - | 2.0 | - | - |
| | 2 | 2 | 2.0 | - | - | - | - | - | 2.0 | - |
| | 3 | 3 | - | 2.0 | - | - | - | - | - | 2.0 |
| | 4 | 4 | - | - | 2.0 | - | - | 2.0 | - | - |
| | 5 | 5 | - | - | - | 2.0 | - | 2.0 | - | - |
| | 6 | 6 | - | - | - | 2.0 | - | - | 2.0 | - |
| | 7 | 7 | 2.0 | - | - | - | - | 0.1 | - | - |
| | 8 | 8 | 2.0 | - | - | - | - | - | 5.0 | - |
| | 9 | 9 | 2.0 | - | - | - | - | - | - | 10.0 |
| | 10 | 10 | 2.0 | - | - | - | - | - | - | 30.0 |
| | 11 | 11 | - | - | 0.01 | - | - | - | - | 2.0 |
| | 12 | 12 | - | - | 1.0 | - | - | - | - | 2.0 |
| | 13 | 13 | - | - | 5.0 | - | - | - | - | 2.0 |
| | 14 | 14 | - | - | 10.0 | - | - | - | - | 2.0 |
| Comparative Example 1 | | 15 | - | - | - | - | 2.0 | 2.0 | - | - |

| | | | | | | | | | | |
|---|---|---|---|---|---|---|---|---|---|---|
| (Unit: parts by mass with respect to 100 parts by mass of addition-curable liquid silicone rubber) | | | | | | | | | | |

### <Evaluation>

The following evaluations were performed for electrophotographic belts No. 1 to 15.

The initial volume resistivity and the volume resistivity after applying a DC voltage of 1000V were measured. In addition, the absolute value of the difference between the initial volume resistivity and the volume resistivity after voltage application was divided by the initial volume resistivity, and the value obtained was multiplied by 100 to calculate the rate of change in volume resistivity.

In addition, image evaluation was performed when each electrophotographic belt was used as an intermediate transfer belt to form an electrophotographic image.

### [Measurement of initial volume resistivity]

The volume resistivity of each of electrophotographic belts No. 1 to 15 according to each of the above examples and comparative examples before the formation of an electrophotographic image was measured as follows.

That is, the value of the initial volume resistivity was defined as the average value obtained by measuring 58 points at 20 mm intervals for each electrophotographic belt having a circumference of 1147 mm.

The volume resistivity was measured by the double ring electrode method according to Japanese Industrial Standards (JIS) K6271-1: 2015 with a high resistivity meter (trade name: Hiresta MCP-HT450, manufactured by Mitsubishi Chemical Analytech Co., Ltd.). A "UR probe" was used as an electrode, and the value when a voltage of 1000V was applied for 10 seconds was used. The volume resistivity was measured in an environment with a temperature of 25°C and a relative humidity of 55%.

### [Measurement of volume resistivity after electrophotographic image formation and image evaluation]

Instead of the intermediate transfer belt attached to the full-color electrophotographic image forming apparatus (trade name: imagePRESS C800, manufactured by Canon Inc.), the electrophotographic belt according to each example or comparative example was attached as an intermediate transfer belt. A solid cyan image was output on A4 size plain paper (trade name: CS-680A4, manufactured by Canon Inc.). The cyan and magenta developers mounted on the print cartridge of the electrophotographic image forming apparatus were used to form the image. In addition, the image was output in an environment of normal temperature and humidity (temperature of 25°C, relative humidity of 55%). The full-color electrophotographic image forming apparatus includes a transfer roller in which the primary transfer unit is arranged to face the electrophotographic photosensitive member via an intermediate transfer belt, and the primary transfer voltage was 1000 to 3000V and the secondary transfer voltage was 1000V

Under the above output conditions, 100 pieces of images were output. Subsequently, the paper was changed to B5 size plain paper (trade name: CS-680B5, manufactured by Canon Inc.), and 60000 pieces of sheets were continuously output. Furthermore, the paper was changed to A4 size plain paper (trade name: CS-680A4, manufactured by Canon Inc.), and one piece of image was output. Thereafter, the intermediate transfer belt to be evaluated was removed from the full-color electrophotographic image forming apparatus, and the volume resistivity was measured by the same method as the above measurement of the initial volume resistivity. The obtained values were arithmetically averaged to calculate the volume resistivity after applying a voltage.

In addition, the absolute value of the difference between the initial volume resistivity and the volume resistivity after voltage application was divided by the initial volume resistivity, and the value obtained was multiplied by 100 to calculate the rate of change in volume resistivity.

Furthermore, in the above electrophotographic image formation, a solid cyan image formed on the A4 size paper output on the 100th sheet (hereinafter, also referred to as "initial image") was visually observed. In addition, a solid cyan image formed on the last output A4 size paper (hereinafter, also referred to as "final image") was visually observed. The observed results were evaluated according to the following criteria.

### (Image evaluation criteria)

Rank A: no unevenness was observed.
Rank B: minor unevenness was observed in some portions.
Rank C: unevenness was observed in about 20% of the observed image.
Rank D: unevenness was observed in more than half of the observed image.

These evaluation results are shown in Table 4.

**Table 4**

| | | Electrophotographic belt No. | Volume resistivity (Ω·cm) | | Rate of change in volume resistivity | Image evaluation rank | |
|---|---|---|---|---|---|---|---|
| | | | Initial | After voltage application | | Initial image | Final image |
| Example | 1 | 1 | 2.5×10¹⁰ | 3.3×10¹⁰ | 32.4% | A | A |
| | 2 | 2 | 2.7×10¹⁰ | 3.4×10¹⁰ | 28.2% | A | A |
| | 3 | 3 | 3.5×10¹⁰ | 4.5×10¹⁰ | 25.7% | A | A |
| | 4 | 4 | 2.0×10¹⁰ | 2.7×10¹⁰ | 36.7% | A | A |
| | 5 | 5 | 2.4×10¹⁰ | 3.4×10¹⁰ | 39.5% | A | A |
| | 6 | 6 | 2.2×10¹⁰ | 3.1×10¹⁰ | 37.5% | A | A |
| | 7 | 7 | 7.2×10¹⁰ | 1.0×10¹¹ | 40.6% | A | A |
| | 8 | 8 | 9.4×10⁹ | 1.2×10¹⁰ | 30.9% | A | A |
| | 9 | 9 | 7.7×10⁹ | 9.8×10⁹ | 27.5% | A | A |
| | 10 | 10 | 7.1×10⁹ | 8.7×10⁹ | 22.5% | A | A |
| | 11 | 11 | 1.2×10¹¹ | 1.9×10¹¹ | 59.0% | A | A |
| | 12 | 12 | 9.6×10¹⁰ | 1.4×10¹¹ | 44.8% | A | A |
| | 13 | 13 | 2.9×10¹⁰ | 3.5×10¹⁰ | 20.8% | A | A |
| | 14 | 14 | 2.3×10¹⁰ | 2.7×10¹⁰ | 17.4% | A | A |
| Comparative Example 1 | | 15 | 6.7×10¹⁰ | 5.2×10¹¹ | 679.9% | A | C |

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

Provided is a curable silicone rubber mixture that provides a cured silicone rubber having a small change in volume resistivity when a high voltage is applied for a long period of time. The curable silicone rubber mixture includes a curable silicone rubber, a cation having one or more carbon-carbon double bonds in the molecular structure thereof, a metal oxide particle having a hydrophilization ratio at the surface thereof of 0.50 or more, and an anion having a specific structure.

## Claims

1. A curable silicone rubber mixture, comprising:
a curable silicone rubber;
a cation having one or more carbon-carbon double bonds in a molecular structure thereof;
a metal oxide particle having a hydrophilization ratio at a surface thereof of 0.50 or more; and
an anion, wherein
the anion is at least one compound selected from the group consisting of compounds represented by the following structural formulae (1) and (2): 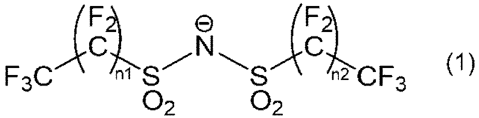
wherein, n1 and n2 each independently represent an integer of 2 or more and 7 or less, 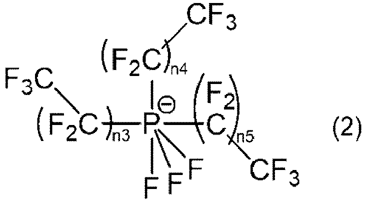
wherein, n3 to n5 each independently represent an integer of 1 or more and 5 or less.

2. The curable silicone rubber mixture according to claim 1, wherein the metal oxide particle is an alumina particle or a silica particle.

3. The curable silicone rubber mixture according to claim 1, wherein the metal oxide particle is a silica particle having a hydrophilization ratio at a surface thereof of 0.51 or more and 0.98 or less.

4. The curable silicone rubber mixture according to any one of claims 1 to 3, wherein the metal oxide particle is contained in a ratio of 0.1 parts by mass or more and 30.0 parts by mass or less with respect to 100 parts by mass of the curable silicone rubber.

5. The curable silicone rubber mixture according to any one of claims 1 to 4, wherein the cation is at least one compound selected from the group consisting of compounds represented by the following structural formulae (3) and (4): 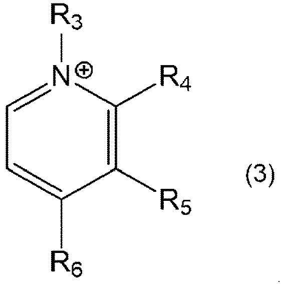 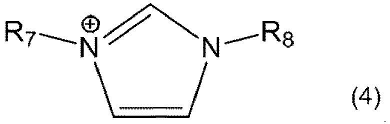 wherein, R₃, R₇, and R₈ each independently represent a hydrocarbon group having a carbon number of 1 or more and 8 or less, and R₄ to R₆ each independently represent a hydrogen atom or a hydrocarbon group having a carbon number of 1 or more and 8 or less.

6. The curable silicone rubber mixture according to any one of claims 1 to 5, wherein a total amount of the cation and the anion is 0.01 parts by mass or more and 10 parts by mass or less with respect to 100 parts by mass of the curable silicone rubber.

7. The curable silicone rubber mixture according to any one of claims 1 to 6, further comprising an electronic electroconductive agent in an amount of 0.3 parts by mass or less with respect to 100 parts by mass of the curable silicone rubber.

8. The curable silicone rubber mixture according to any one of claims 1 to 6, being free of an electronic electroconductive agent.

9. An electrophotographic member, comprising a substrate and an elastic layer on the substrate,
the elastic layer containing:
a silicone rubber;
a cation having one or more carbon-carbon double bonds in a molecular structure thereof;
a metal oxide particle having a hydrophilization ratio at a surface of the metal oxide particle of 0.50 or more; and
an anion, wherein
the anion is at least one compound selected from the group consisting of compounds represented by the following structural formulae (1) and (2): 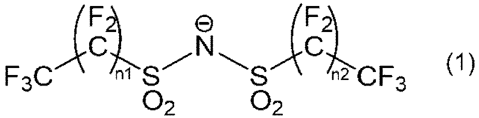
wherein n1 and n2 each independently represent an integer of 2 or more and 7 or less; and 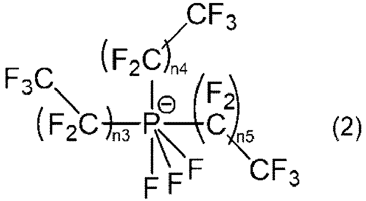
wherein n3 to n5 each independently represent an integer of 1 or more and 5 or less.

10. The electrophotographic member according to claim 9, wherein a volume resistivity of the electrophotographic member is 1.0 × 10⁸ Ω·cm or more and 2.0 × 10¹¹ Ω·cm or less.

11. The electrophotographic member according to claim 9 or 10, wherein the electrophotographic member is an electrophotographic belt having an endless belt shape.

12. The electrophotographic member according to any one of claims 9 to 11, wherein the metal oxide particle is an alumina particle or a silica particle.

13. The electrophotographic member according to any one of claims 9 to 12, wherein the metal oxide particle is contained in a ratio of 0.1 parts by mass or more and 30.0 parts by mass or less with respect to 100 parts by mass of the silicone rubber.

14. The electrophotographic member according to any one of claims 9 to 12, wherein the cation is at least one compound selected from the group consisting of compounds represented by the following structural formulae (3) and (4): 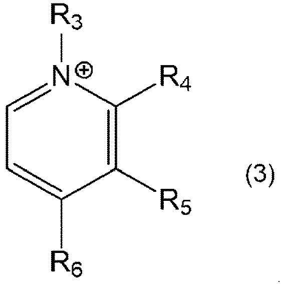 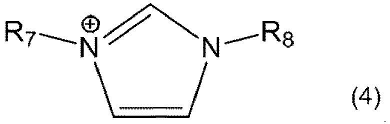 wherein, R₃, R₇, and R₈ each independently represent a hydrocarbon group having a carbon number of 1 or more and 8 or less, and R₄ to R₆ each independently represent a hydrogen atom or a hydrocarbon group having a carbon number of 1 or more and 8 or less.

15. An electrophotographic image forming apparatus, comprising the electrophotographic member according to any one of claims 9 to 14 as an intermediate transfer member.

## Patentansprüche

1. Härtbare Silicon-Kautschuk-Mischung, umfassend:
einen härtbaren Silicon-Kautschuk;
ein Kation mit einer oder mehreren Kohlenstoff-KohlenstoffDoppelbindungen in dessen Molekülstruktur;
ein Metalloxidteilchen mit einem Hydrophilierungsgrad an einer Oberfläche von 0,50 oder mehr; und
ein Anion, wobei
das Anion mindestens eine Verbindung ist, die aus der Gruppe ausgewählt ist, die aus Verbindungen besteht, die durch die folgenden Strukturformeln (1) und (2) dargestellt sind: 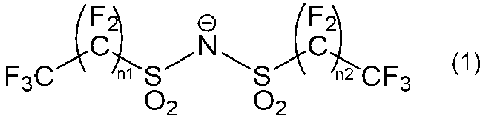
wobei n1 und n2 jeweils unabhängig voneinander eine ganze Zahl von 2 oder mehr und 7 oder weniger darstellen, 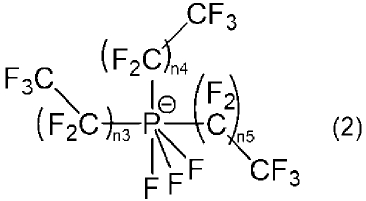
wobei n3 bis n5 jeweils unabhängig voneinander eine ganze Zahl von 1 oder mehr und 5 oder weniger darstellen.

2. Härtbare Silicon-Kautschukmischung nach Anspruch 1, wobei das Metalloxidteilchen ein Aluminiumoxidteilchen oder ein Siliciumoxidteilchen ist.

3. Härtbare Silicon-Kautschukmischung nach Anspruch 1, wobei das Metalloxidteilchen ein Siliciumoxidteilchen mit einem Hydrophilierungsgrad an einer Oberfläche von 0,51 oder mehr und 0,98 oder weniger ist.

4. Härtbare Silicon-Kautschukmischung nach einem der Ansprüche 1 bis 3, wobei das Metalloxidteilchen in einem Anteil von 0,1 Masseteilen oder mehr und 30,0 Masseteilen oder weniger, bezogen auf 100 Masseteile des härtbaren Silicon-Kautschuks, enthalten ist.

5. Härtbare Silicon-Kautschukmischung nach einem der Ansprüche 1 bis 4, wobei das Kation zumindest eine Verbindung ist, die aus der Gruppe ausgewählt ist, die aus Verbindungen besteht, die durch die folgenden Strukturformeln (3) und (4) dargestellt sind: 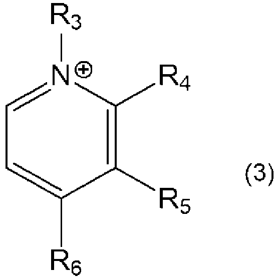 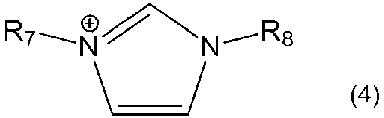 wobei R₃, R₇ und R₈ jeweils unabhängig voneinander eine Kohlenwasserstoffgruppe mit einer Kohlenstoffanzahl von 1 oder mehr und 8 oder weniger darstellen, und R₄ bis R₆ jeweils unabhängig voneinander ein Wasserstoffatom oder eine Kohlenwasserstoffgruppe mit einer Kohlenstoffanzahl von 1 oder mehr und 8 oder weniger darstellen.

6. Härtbare Silicon-Kautschukmischung nach einem der Ansprüche 1 bis 5, wobei die Gesamtmenge des Kations und des Anions 0,01 Masseteile oder mehr und 10 Masseteile oder weniger, bezogen auf 100 Masseteile des härtbaren Silicon-Kautschuks, beträgt.

7. Härtbare Silicon-Kautschukmischung nach einem der Ansprüche 1 bis 6, die ferner ein elektronisch elektrisch leitendes Mittel in einer Menge von 0,3 Masseteilen oder weniger, bezogen auf 100 Masseteile des härtbaren Silicon-Kautschuks, umfasst.

8. Härtbare Silicon-Kautschukmischung nach einem der Ansprüche 1 bis 6, die frei von einem elektronischen elektrisch leitenden Mittel ist.

9. Elektrophotographisches Element, umfassend ein Substrat und eine elastische Schicht auf dem Substrat,
wobei die elastische Schicht enthält:
einen Silicon-Kautschuk;
ein Kation mit einer oder mehreren Kohlenstoff-KohlenstoffDoppelbindungen in seiner Molekülstruktur;
ein Metalloxidteilchen mit einem Hydrophilierungsgrad an einer Oberfläche des Metalloxidteilchens von 0,50 oder mehr; und
ein Anion, wobei
das Anion mindestens eine Verbindung ist, die aus der Gruppe ausgewählt ist, die aus Verbindungen besteht, die durch die folgenden Strukturformeln (1) und (2) dargestellt sind: 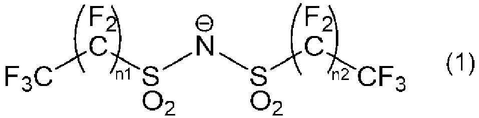
wobei n1 und n2 jeweils unabhängig voneinander eine ganze Zahl von 2 oder mehr und 7 oder weniger darstellen; und 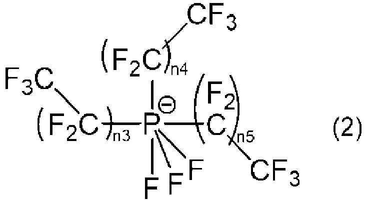
wobei n3 bis n5 jeweils unabhängig voneinander eine ganze Zahl von 1 oder mehr und 5 oder weniger darstellen.

10. Elektrophotographisches Element nach Anspruch 9, wobei der Volumenwiderstand des elektrophotographischen Elements 1,0 × 10⁸ Ω·cm oder mehr und 2,0 × 10¹¹ Ω·cm oder weniger beträgt.

11. Elektrophotographisches Element nach Anspruch 9 oder 10, wobei das elektrophotographische Element ein elektrophotographisches Band mit einer Endlosbandform ist.

12. Elektrophotographisches Element nach einem der Ansprüche 9 bis 11, wobei das Metalloxidteilchen ein Aluminiumoxidteilchen oder ein Siliciumoxidteilchen ist.

13. Elektrophotographisches Element nach einem der Ansprüche 9 bis 12, wobei das Metalloxidteilchen in einem Anteil von 0,1 Masseteilen oder mehr und 30,0 Masseteilen oder weniger, bezogen auf 100 Masseteile des härtbaren Silicon-Kautschuks, enthalten ist.

14. Elektrophotographisches Element nach einem der Ansprüche 9 bis 12, wobei das Kation mindestens eine Verbindung ist, die aus der Gruppe ausgewählt ist, die aus Verbindungen besteht, die durch die folgenden Strukturformeln (3) und (4) dargestellt sind: 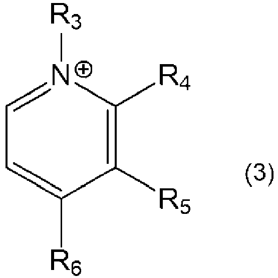 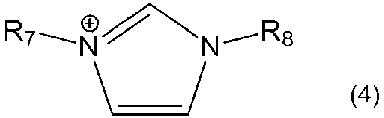 wobei R₃, R₇ und R₈ jeweils unabhängig voneinander eine Kohlenwasserstoffgruppe mit einer Kohlenstoffanzahl von 1 oder mehr und 8 oder weniger darstellen, und R₄ bis R₆ jeweils unabhängig voneinander ein Wasserstoffatom oder eine Kohlenwasserstoffgruppe mit einer Kohlenstoffanzahl von 1 oder mehr und 8 oder weniger darstellen.

15. Elektrophotographischer Bilderzeugungsapparat, der das elektrophotographische Element nach einem der Ansprüche 9 bis 14 als ein Zwischenübertragungselement umfasst.

## Revendications

1. Mélange de caoutchouc silicone durcissable, comprenant :
un caoutchouc silicone durcissable ;
un cation comportant une ou plusieurs doubles liaisons carbone-carbone dans sa structure moléculaire ;
une particule d'oxyde métallique ayant, au niveau de sa surface, un taux d'hydrophilisation supérieur ou égal à 0,50 ; et
un anion, où
l'anion est au moins un composé sélectionné dans le groupe constitué de composés représentés par les formules structurales (1) et (2) suivantes : 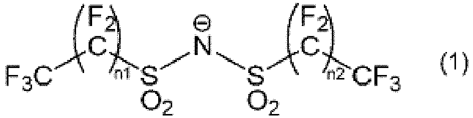
où n1 et n2 représentent chacun indépendamment un nombre entier supérieur ou égal à 2 et inférieur ou égal à 7, 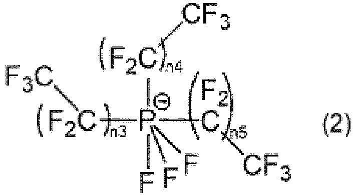
où n3 à n5 représentent chacun indépendamment un nombre entier supérieur ou égal à 1 et inférieur ou égal à 5.

2. Mélange de caoutchouc silicone durcissable selon la revendication 1, dans lequel la particule d'oxyde métallique est une particule d'alumine ou une particule de silice.

3. Mélange de caoutchouc silicone durcissable selon la revendication 1, dans lequel la particule d'oxyde métallique est une particule de silice ayant, au niveau de sa surface, un taux d'hydrophilisation supérieur ou égal à 0,51 et inférieur ou égal à 0,98.

4. Mélange de caoutchouc silicone durcissable selon l'une quelconque des revendications 1 à 3, dans lequel la particule d'oxyde métallique est contenue selon un rapport supérieur ou égal à 0,1 partie par masse et inférieur ou égal à 30,0 parties par masse par rapport à 100 parties par masse du caoutchouc silicone durcissable.

5. Mélange de caoutchouc silicone durcissable selon l'une quelconque des revendications 1 à 4, dans lequel le cation est au moins un composé sélectionné dans le groupe constitué de composés représentés par les formules structurales (3) et (4) suivantes : 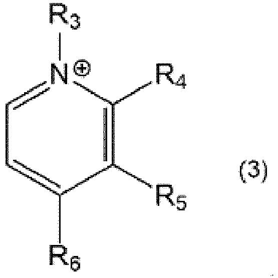 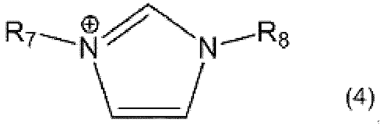 où R₃, R₇ et R₈ représentent chacun indépendamment un groupe hydrocarboné comportant un nombre d'atomes de carbone supérieur ou égal à 1 et inférieur ou égal à 8, et R₄ à R₆ représentent chacun indépendamment un atome d'hydrogène ou un groupe hydrocarboné comportant un nombre d'atomes de carbone supérieur ou égal à 1 et inférieur ou égal à 8.

6. Mélange de caoutchouc silicone durcissable selon l'une quelconque des revendications 1 à 5, dans lequel une quantité totale du cation et de l'anion est supérieure ou égale à 0,01 partie par masse et inférieure ou égale à 10 parties par masse par rapport à 100 parties par masse du caoutchouc silicone durcissable.

7. Mélange de caoutchouc silicone durcissable selon l'une quelconque des revendications 1 à 6, comprenant en outre un agent électroconducteur électronique selon une quantité inférieure ou égale à 0,3 partie par masse par rapport à 100 parties par masse du caoutchouc silicone durcissable.

8. Mélange de caoutchouc silicone durcissable selon l'une quelconque des revendications 1 à 6, le mélange étant exempt d'agent électroconducteur électronique.

9. Élément électrophotographique, comprenant un substrat et une couche élastique située sur le substrat,
la couche élastique contenant :
un caoutchouc silicone ;
un cation comportant une ou plusieurs doubles liaisons carbone-carbone dans sa structure moléculaire ;
une particule d'oxyde métallique ayant, au niveau de sa surface, un taux d'hydrophilisation supérieur ou égal à 0,50 ; et
un anion, où
l'anion est au moins un composé sélectionné dans le groupe constitué de composés représentés par les formules structurales (1) et (2) suivantes : 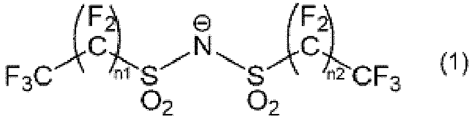
où n1 et n2 représentent chacun indépendamment un nombre entier supérieur ou égal à 2 et inférieur ou égal à 7 ; et 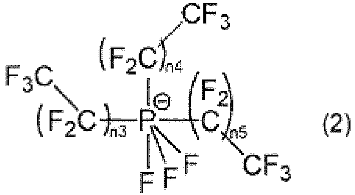
où n3 à n5 représentent chacun indépendamment un nombre entier supérieur ou égal à 1 et inférieur ou égal à 5.

10. Élément électrophotographique selon la revendication 9, dans lequel une résistivité transversale de l'élément électrophotographique est supérieure ou égale à 1,0 × 10⁸ Ω·cm et inférieure ou égale à 2,0 × 10¹¹ Ω·cm.

11. Élément électrophotographique selon la revendication 9 ou 10, l'élément électrophotographique étant une bande électrophotographique ayant une forme de bande sans fin.

12. Élément électrophotographique selon l'une quelconque des revendications 9 à 11, dans lequel la particule d'oxyde métallique est une particule d'alumine ou une particule de silice.

13. Élément électrophotographique selon l'une quelconque des revendications 9 à 12, dans lequel la particule d'oxyde métallique est contenue selon un rapport supérieur ou égal à 0,1 partie par masse et inférieur ou égal à 30,0 parties par masse par rapport à 100 parties par masse du caoutchouc silicone.

14. Élément électrophotographique selon l'une quelconque des revendications 9 à 12, dans lequel le cation est au moins un composé sélectionné dans le groupe constitué de composés représentés par les formules (3) et (4) suivantes : 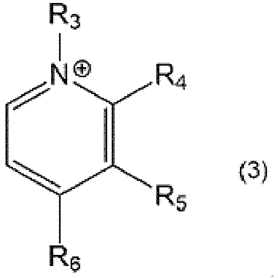 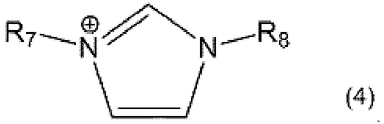 où R₃, R₇ et R₈ représentent chacun indépendamment un groupe hydrocarboné comportant un nombre d'atomes de carbone supérieur ou égal à 1 et inférieur ou égal à 8, et R₄ à R₆ représentent chacun indépendamment un atome d'hydrogène ou un groupe hydrocarboné comportant un nombre d'atomes de carbone supérieur ou égal à 1 et inférieur ou égal à 8.

15. Appareil de formation d'image électrophotographique, comprenant l'élément électrophotographique selon l'une quelconque des revendications 9 à 14 en tant qu'élément de transfert intermédiaire.
